(19) Europäisches Patentamt
European Patent Office
Office européen des brevets

(11) **EP 1 963 150 B1**

(12) **EUROPEAN PATENT SPECIFICATION**

(45) Date of publication and mention
of the grant of the patent:
**29.07.2009 Bulletin 2009/31**

(51) Int Cl.:
***B60T 8/17*** *(2006.01)*    ***B60T 13/74*** *(2006.01)*

(21) Application number: **06850755.7**

(22) Date of filing: **15.11.2006**

(86) International application number:
**PCT/US2006/060896**

(87) International publication number:
**WO 2007/120267 (25.10.2007 Gazette 2007/43)**

(54) **CONTROLLER FOR ELECTROMECHANICAL BRAKING SYSTEM WITH POWER DEMAND LIMITATION AND METHOD**

STEUERUNG FÜR ELEKTROMECHANISCHES BREMSSYSTEM MIT LEISTUNGSBEDARFSBEGRENZUNG UND VERFAHREN

REGULATEUR POUR SYSTEME DE FREINAGE ELECTROMECANIQUE A LIMITATION DE COMMANDE DE DEMANDE DE PUISSANCE ET PROCEDE

(84) Designated Contracting States:
**AT BE BG CH CY CZ DE DK EE ES FI FR GB GR HU IE IS IT LI LT LU LV MC NL PL PT RO SE SI SK TR**

(30) Priority: **30.11.2005 US 741328 P**
**11.07.2006 US 807006 P**

(43) Date of publication of application:
**03.09.2008 Bulletin 2008/36**

(73) Proprietor: **Goodrich Corporation**
**Charlotte, NC 28217-4578 (US)**

(72) Inventor: **RALEA, Mihai**
**Boonton Township, New Jersey 07005 (US)**

(74) Representative: **Hilleringmann, Jochen**
**Patentanwälte**
**Von Kreisler-Selting-Werner,**
**Bahnhofsvorplatz 1 (Deichmannhaus am Dom)**
**50667 Köln (DE)**

(56) References cited:
**EP-A- 0 770 531**       **EP-A- 1 174 322**
**EP-A- 1 271 762**       **DE-A1- 19 859 605**
**DE-B3- 10 361 042**     **US-A- 4 568 863**
**US-A- 4 776 433**       **US-A- 5 417 624**

**Description**

**TECHNICAL FIELD**

The invention described herein relates generally to electromechanical actuator systems and, more particularly, to an electromechanical braking system for a vehicle, such as an aircraft.

**BACKGROUND**

Electromechanical brake systems are known in the art, as are other electromechanical actuator systems. These systems draw electric power from a power supply for operation. During peak power draw, the amount of power demanded can be substantial. To meet the peak power demands of the electromechanical actuator systems, an appropriately sized power supply and associated conductors must be available. As the peak power demand increases, the size and weight of the power supply and associated components usually increase as well. In environments such as aircrafts, however, there is an ever present desire to reduce the size and weight on-board items.

US-A- 568 863 discloses at least one electromechanical actuator including a motor for applying a force to a moveable item in response to a motor drive signal, a power supply, and an electromechanical actuator controller for generating the motor drive signal based on a motor current command and with electrical power from the power supply. The electromechanical actuator controller includes a motor current limiter for limiting the motor current command to at least one of a positive current limit or a negative current limit, and a current driver for outputting the motor drive signal to the motor in accordance with the limited motor current command.

US-A-4 776 433 discloses a controller for an electromechanical actuator that is driven in response to a motor drive signal generated by the controller, comprising a motor current limiter for limiting a motor current command to at least one of a positive current limit or a negative current limit, the positive and negative current limits being a function of motor velocity and a current driver for outputting the motor drive signal to the motor in accordance with the limited motor current command.

**SUMMARY OF THE INVENTION**

The present invention provides a system and method for limiting peak power demand of an electrochemical actuator as defined in claims 1, 8 and 12, respectively. The dependent claims relate to individual embodiments of the invention.

More particularly, according to the invention, a motor current command is limited to at least one of a positive current limit or a negative current limit, which are a function of motor velocity. A motor drive signal is output to the motor in accordance with the limited motor current command. Limiting the current delivered to a motor based on motor speed can advantageously reduce the peak power demand. Therefore, an electrical power supply from which power for motor operation is drawn can be correspondingly smaller and lighter than a power supply sized to meet the peak power demands without current limits. Associated benefits may include a reduction in the size of cabling that connects to the power supply and fuel economy gains.

According to one aspect of the invention, an aircraft, includes at least one electromechanical actuator including a motor for applying a force to a moveable item in response to a motor drive signal; a power supply; and an electromechanical actuator controller for generating the motor drive signal based on a motor current command and with electrical power from the power supply. The electromechanical actuator controller includes a motor current limiter for limiting the motor current command to at least one of a positive current limit or a negative current limit, the positive and negative current limits being a function of motor velocity by which the positive current limit and negative current limit are inversely related to the motor velocity; and a current driver for outputting the motor drive signal to the motor in accordance with the limited motor current command.

The moveable item can be an actuator for applying a breaking force to perform a braking operation of a wheel of the aircraft, an actuator for positioning a flight control surface of the aircraft, or e.g., an actuator for a landing gear of the aircraft.

According to another aspect of the invention, a controller for an electromechanical actuator having a motor that is driven in response to a motor drive signal generated by the controller, includes a motor current limiter for limiting a motor current command to at least one of a positive current limit or a negative current limit, the positive and negative current limits being a function of motor velocity by which the positive current limit and negative current limit are inversely related to the motor velocity; and a current driver for outputting the motor drive signal to the motor in accordance with the limited motor current command.

In one embodiment, the current driver of the controller provides closed loop current control of the motor drive signal. Furthermore, the controller may comprise a closed loop feedback element for generating the motor current command based on an input command received by the controller, wherein the closed loop feedback element may include a velocity servo compensator that provides closed loop velocity control of the motor current command and/or a force servo compensator that provides closed loop force control of the motor current command. The force servo compensator may receive a braking input command and generates an intermediate motor current command input to the velocity servo compensator. Finally, the positive and negative current limits may be established in the controller with a power demand controller that is embodied as executable logic.

According to yet another aspect of the invention, a method of limiting peak power demand of a controller for an electromechanical brake actuator having a motor, the electromechanical brake actuator operative to apply a braking force to brake a wheel of a vehicle includes limiting a motor current command to at least one of a positive current limit or a negative current limit, the positive and negative current limits being a function of motor velocity by which the positive current limit and negative current limit are inversely related to the motor velocity; and outputting the motor drive signal to the motor in accordance with the limited motor current command.

In one embodiment, the outputting of the motor drive signal includes carrying out closed loop feedback control of the motor drive signal. Moreover, the method may further comprise receiving a braking input command and carrying out closed loop feedback control with respect to at least one of motor velocity of force applied by the electromagnetical brake actuator to generate the motor current command. In a further embodiment of the invention, the method is applied to a vehicle which comprises an aircraft.

**BRIEF DESCRIPTION OF DRAWINGS**

These and further features of the present invention will be apparent with reference to the following description and drawings, wherein:

FIG. 1 is a schematic illustration of an exemplary aircraft having at least one electromechanical actuator system in accordance with the present invention;
FIG. 2 is a block diagram of an exemplary braking system for the aircraft in accordance with the present invention;
FIG. 3 is a schematic view of the exemplary braking system of FIG. 2, showing an electromechanical actuator, an electromechanical actuator controller and a brake disk stack;
FIG. 4 is a cross-sectional view of an exemplary electromechanical actuator of FIG. 3;
FIG. 5 is a functional block diagram of the actuator and controller of FIG. 3.

**DESCRIPTION**

In the description that follows, like components have been given the same reference numerals, regardless of whether they are shown in different embodiments. To illustrate an embodiment(s) of the present invention in a clear and concise manner, the drawings may not necessarily be to scale and certain features may be shown in somewhat schematic form.

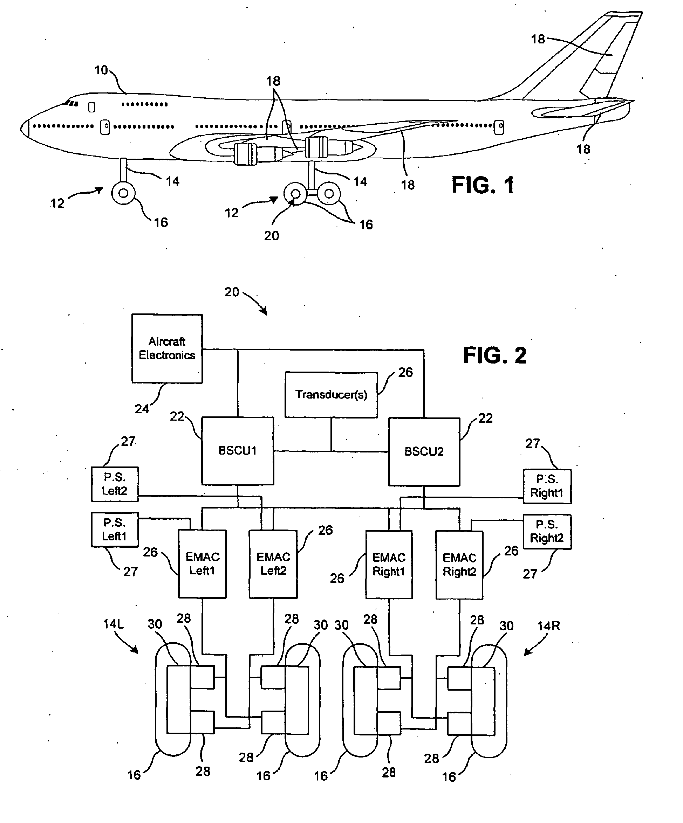

Referring initially to FIG. 1, shown is an aircraft 10 having at least one electromechanical actuator system. Exemplary electromechanical actuator systems in accordance with the present invention are described below. The illustrated aircraft 10 is intended to depict a generic aircraft and not any particular make or model of aircraft.

The aircraft 10 can include various moveable items and those items can be driven by an associated electromechanical actuator. For example, the aircraft 10 includes landing gear 12. The landing gear 12 may include a moveable strut 14 and wheels 16. One of more of the wheels 16 can have a braking system that includes a moveable actuator ram for applying braking force. In addition, the aircraft 10 can include moveable flight control surfaces 18, such as, but not limited to, any combination of a rudder, elevators, ailerons, flaps and slats. Multifunction control surfaces 18, such as flaperons and elevons, may be employed on the aircraft 10.

With additional reference to FIG. 2, shown is a block diagram of an exemplary braking system 20 for the aircraft 10. As will become more apparent through the following description, the braking system includes an electromechanical actuator controller that draws power from a power source to drive a motor that controls movement of a moveable item in the form of an actuator ram. The actuator ram applies force to a brake disk stack (also referred to herein as a brake stack) that slows rotation of an associated one of the wheels 16. Peak power demand of the electromechanical actuator controller is regulated as a function of the speed (e.g., angular velocity) of the motor.

The braking system 20 shown in FIG. 2 represents an exemplary architecture for satisfying typical redundancy and performance specifications of an aircraft. Such architecture is presented by way of example to illustrate the context in which the principles of the present invention may be employed. It will be appreciated, however, that the present invention has utility with other braking systems and systems other than braking systems. Therefore, the present invention is not limited to the particular architecture shown.

The system 20 includes two brake control units (BSCUs) 22 designated BSCU1 and BSCU2, respectively.

BSCU1 and BSCU2 are redundant and are both configured to provide an input/output interface to aircraft electronics 24 within a cockpit of the aircraft 10, for example, via a bus or network. In addition, BSCU1 and BSCU2 each contain circuitry (e.g., a processor for executing logic embodied as executable code) for performing top level brake control and antiskid algorithm processing functions. BSCU1 and BSCU2 each receive proportional brake command signals from transducers 26 associated with user interface devices, such brake pedals or a parking brake switch or lever.

BSCU1 and BSCU2 process the signals from the transducers 26 based on the aforementioned brake control and antiskid algorithms to produce a brake command signal, or set of signals. The brake command signal(s) are provided to electromechanical actuator controllers (EMACs) 26. The particular brake control and antiskid algorithms employed by the BSCUs 22 can be conventional. As such, further detail based thereon is largely omitted in the present description for sake of brevity.

BSCU1 and BSCU2 each provide brake commands and otherwise communicate with the EMACs 26 via a suitable infrastructure, such as a bus or network. In the illustrated system 20, there are four redundant EMACs 26 respectively labeled EMAC Left1, EMAC Left2, EMAC Right1 and EMAC Right2. As shown in FIG. 2, each EMAC 26 is coupled to the BSCUs 22 to receive brake commands (also referred to as input commands or input braking commands) from each of the BSCUs 22. Each EMAC 26 contains circuitry (e.g., a processor for executing logic embodied as executable code) for converting the brake commands into a limited motor current command. Each EMAC 26 further contains a current driver for generating a motor drive signal based on the limited motor current command.

Each EMAC 26 can derive power from an aircraft power supply 27. In the illustrated embodiment, EMAC left1 derives power from aircraft primary power supply left1, EMAC left2 derives power from aircraft primary power supply left2, EMAC right1 derives power from aircraft primary power supply right1, and EMAC right2 derives power from aircraft primary power supply right2.

The EMACs 26 may also be referred to simply as controllers 26. The controllers 26 receive left and right brake commands from the BSCUs 22 and provide the motor drive signal to brake actuator modules, also referred to as electromechanical actuators 28 or simply as actuators 28, to drive an actuator component to a commanded position. In this manner, controlled braking may be accomplished.

For each wheel 16, there may be multiple actuators 28 to apply braking force to a brake stack 30 in response to electrical control signals, or motor drive signal, provided by a respective controller 26. For example, the controllers 26 may be paired such that one of the controllers 26 of a pair controls half of the actuators 28 for an associated one of a left wing landing gear 14L or a right wing landing gear 14R. The controlled actuators 28 for any one controller 26 can be on different wheels 16 as shown or on the same wheel 16, in which case a single controller 26 may control all actuators 28 associated with one of the wheels 16.

Additional details of suitable braking systems for the aircraft 10 can be found in commonly assigned U.S.-A-6,003,640, US-B 6,296,325, US-B 6,402,259 and US-B-6,662.907.

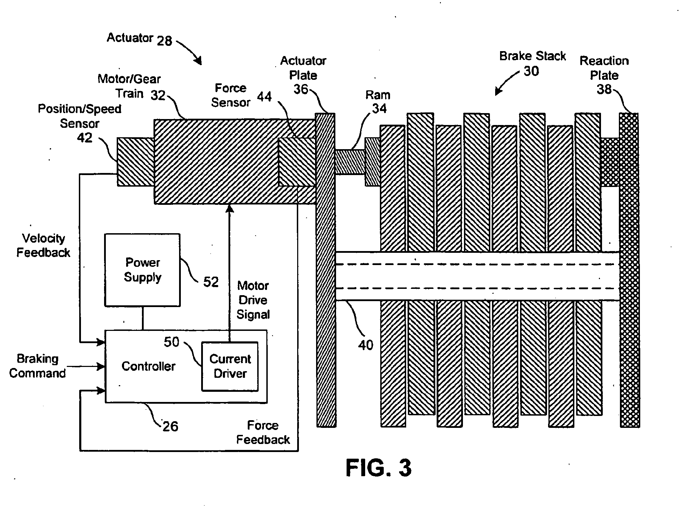

With additional reference to FIG. 3, illustrated is a schematic view of the actuator 28 and controller 26 operatively arranged with the brake stack 30. The actuator 28 is configured to exert a controlled brake force on the brake stack 30. In the illustrated embodiment, the brake stack 30 includes multiple disks and is associated with one of the wheels 16 (FIGS. 1 and 2) of the aircraft 10 (FIG. 1) to provide braking in response to pilot commands and/or antiskid commands. The brake stack 30 can include rotor disks that are keyed to the wheel 16 for rotation therewith. The disks that rotate with the wheel 16 are interleaved with stator disks that do not rotate with the wheel 16. Compression of the interleaved set of disks effects braking of the wheel 16.

The actuator 28 includes a motor and gear train 32 that drives an actuator ram 34 (also referred to as a force applicator) in an axial direction. The actuator 28 is mounted to an actuator plate 36 through which the actuator ram 34 extends. The brake stack 30 is positioned between the actuator plate 36 and a reaction plate 38. In order to exert a braking force, the motor and gear train 32 is controlled by the controller 26 to cause the actuator ram 34 to extend towards the brake stack 30. In this manner, a damp or brake force is exerted on the brake stack 30 between the actuator ram 34 and the reaction plate 38. Torque is taken out by the brake stack 30 through a torque tube 40 or the like.

In order to release a braking force, the controller 26 controls the motor and gear train 32 to drive the actuator ram 36 in the reverse direction away from the brake stack 30. In the event of no braking, it is desirable to provide a running clearance between the brake stack engagement surface of the actuator ram 34 and the brake stack 30. Accordingly, the controller 26 controls the motor and gear train 32 to provide the desired running clearance when braking is not commanded.

The controller 26 receives as an input in the form of an input signal, such as a force or braking command signal. The value of the command signal is typically proportionally based on the degree to which the pilot has depressed a corresponding brake pedal. In the event of light braking, the command signal may have a low value that causes the controller 26 to drive the motor and gear train 32 such that the actuator ram 34 exerts a light brake force on the brake stack 30. Similarly, in the event of heavy braking the command signal may have a high value that causes the controller 26 to drive the motor and gear train 30 such that the actuator ram 34 exerts a heavy brake force on the brake stack 30. In addition, or in the alternative, the command signal may be based on the results of an antiskid control algorithm carried out by the controller 26 or elsewhere within the aircraft 10, such as in the BSCU 22 (FIG. 2).

As shown in FIG. 3, the actuator 28 includes a position and/or speed sensing device 42. As will be discussed below, current draw is limited as a function of motor velocity. Therefore, for purposes of the description, the position/speed sensor 42 will be referred to as a tachometer 42. In one embodiment, the tachometer 42 is embodied as a resolver that senses the position of the rotor of the motor in the motor and gear train 32. Based on the output of the resolver, the controller 26 is able to detect the direction and number of revolutions of the rotor and how fast the rotor is spinning (e.g., in revolutions per minute). Since the ratio of the gear train of the motor and gear train 32 in combination with the actuator ram 34 is known, the controller 26 is able to compute the relative position of the actuator ram 34 and motor velocity based on the output of the resolver. In other words, the output of the resolver provides relative feedback data that can be converted to a position value of the ram 34 and/or a velocity value of the motor. That is, when the position/speed sensor 42 is a resolver, rotor position and rotor speed can be interchanged by tracking resolver output with a position counter and timer (e.g., position accumulator) and making a comparison against a reference location for the actuator ram 34.

In other embodiments, the position/speed sensor 42 can be embodied as separate sensors, one for providing absolute or relative position feedback to the controller 26 and the other for providing motor velocity feedback to the controller 26. In any implementation, position feedback information assist the controller 26 in performing position based control functions of the actuator 28 and velocity feedback information assists the controller 26 in performing velocity based control functions of the actuator 28. According to the exemplary embodiment, the motor within the motor and gear train 32 is a brushless DC motor. Consequently, the controller 26 also utilizes the output of the resolver to determine the appropriate phasing of the power signals provided to the motor via the motor drive signal to provide a desired motor commutation. In this manner, there is no need for separate position sensors for the DC motor and the actuator ram 34, respectively.

The actuator 28 further includes a force sensor 44 that detects the force exerted by the actuator ram 34 onto the brake stack 30. The output of the force sensor 44 is fed back as a force feedback signal and is input to the controller 26 for performing force based control functions over the actuator 28. The force sensor 44 may be any type of known force sensor including, but not limited to, a force load cell or the like.

In FIG. 3, for sake of simplicity, only a single actuator 28 is shown for applying a brake force to the brake stack 30. However, as indicated above with respect to FIG. 2, it will be appreciated that typically the system will include multiple, identically operated actuators 28 spaced apart on the actuator plate 36 and each for exerting brake force on the brake stack 30. Each actuator 28 may have its own position/speed sensor 42 and force sensor 44 that provide feedback signals to the appropriate controller(s) 26.

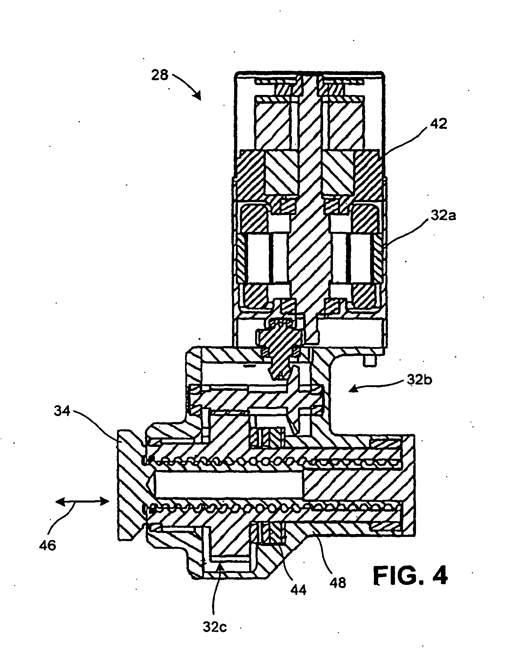

With additional reference to FIG. 4, the exemplary actuator 28 is shown in cross-section. The actuator 28 includes a motor 32a with an integral resolver position/speed sensor 42. The motor 32a drives a gear train 32b, which, in turn, drives a ballscrew assembly 32c. The ballscrew assembly 32c drives the actuator ram 34 back and forth in the axial direction of arrow 46 so as to exert a force on the brake stack 30 (FIG. 3).

Reaction of the ballscrew assembly 32c, which corresponds to load reaction force of the actuator ram 34, is taken out through the force sensor 44 and into an actuator housing 48 and then into the actuator plate 36. In the illustrated embodiment, the force sensor 44 is a force load cell located between the ballscrew assembly 32c and the actuator housing 48. In this manner, the output of the force sensor 44 is indicative of the brake force applied by the actuator ram 34 to the brake stack 30.

With continuing reference to FIGs. 3 and 4, the controller 26 uses a closed loop feedback arrangement to generate the motor drive signal in accordance with the input braking command. For example, the controller 26 can use force and/or position compensation to convert the input braking command into a current command. A motor current driver 50 converts the current command into the motor drive signal with sufficient current to drive the motor 32a as desired, including generating sufficient torque to exert a desired amount of braking force on the brake stack 30 with the actuator ram 34. An exemplary description of position and force feedback based operation of the controller 26 can be found in US-A-2005 269872.

Operational electrical, power for motor drive signal generation by the motor driver 50 can be derived from a power supply 52. The power supply 52 can be any suitable power source available from the aircraft 10. For instance, the power supply 52 can be the power supply 27 of FIG. 2, DC or AC power busses (connected to the controller directly or via a voltage converter), a battery, an independent power generator or combination of sources where one source supplements for another if the first were to fail to supply power.

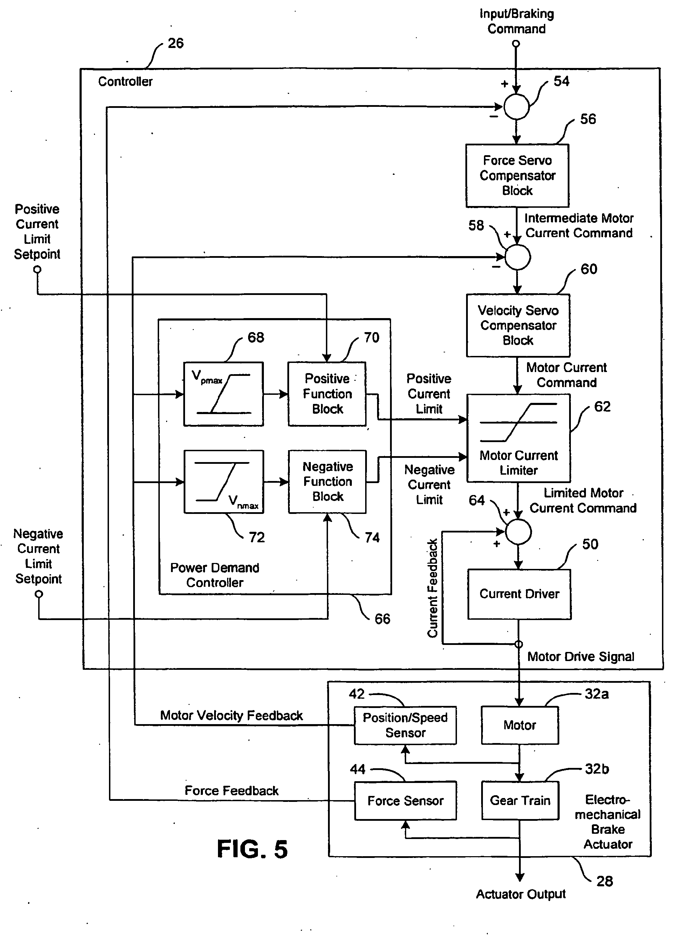

With additional reference to FIG. 5, a block diagram of the controller 26 is shown. FIG. 5 also represents a control method. The control approach uses motor velocity to limit peak power demand on the power supply (FIG. 4). It will be appreciated that the control functions of the controller 26 can be embodied as executable logic that is executed by a processor of the controller 26. Alternatively, dedicated circuitry can be used to carry out the control functions described herein. As described below in greater detail, the illustrated controller 26 includes an inner current servo control loop, an intermediate velocity servo control loop and an outer force servo control loop.

A first adder 54 compares the input braking commands and the force feedback signal output by the force sensor 44. In one embodiment, the input braking command may be received in the form of a force command. The difference signal from adder 54 is input to a force servo compensator block 56 that acts on the difference signal to generate an intermediate motor current command. In the illustrated example, the intermediate motor current command is in the form of velocity command. A second adder 58 compares the intermediate motor current command and the velocity feedback signal generated by the position/speed sensor 42. The difference signal from adder 58 is input to a velocity servo compensator block 60 that acts on the difference signal from adder 58 to generate a motor current command.

The motor current command is input to a motor current limiter 62 that limits the commanded motor current to a value ranging from a positive current limit to a negative current limit. The output of the motor current limiter 62 is a limited motor current command. For example, the motor current command can be a multiplication factor representing full scale force. In one implementation, the motor current command can be a value from -1 to +1, where a negative value represents the commanding of a retraction of the actuator ram 34, a positive value represents the commanding of an advancement of or force application with the actuator ram 34, and zero represents no movement of the actuator ram 34.

The positive and negative current limits are selected to establish a maximum amount of current draw from the power supply 52 (FIG. 3) as a function of motor velocity. If the motor current command were positive and equal to or exceed the positive current limit, the motor current limiter would output the value of the positive current limit as the limited motor current command. Similarly, the motor current command were negative and equal to or exceed the negative current limit in absolute value, the motor current limiter would output the value of the negative current limit as the limited motor current command. If the motor current command were to fall between the positive current limit and the negative current limit, the motor current limiter would output the value of the motor current command as the limited motor current command. For example, if the motor current command is in the form of the forgoing multiplication factor from -1 to +1, the positive current limit were +0.8 and the negative current limit were -0.65, then the limited motor current command will have a range of -0.65 to +0.8.

In a preferred embodiment, the motor current limiter does not scale the motor current command. In other embodiments, scaling or other manipulation of the motor current command is contemplated in addition to or instead of limiting of the motor current command.

A third adder 64 compares the limited motor current command and a current feedback signal derived from the motor drive signal output by the current driver 50. The output of the third adder 64 is input to the current driver 50 for generation of the motor drive signal (e.g., in the form of electrical current) in accordance therewith.

A power demand controller 66 can be used to generate the positive and negative current limits. As indicated, those limits are preferably based on motor velocity. In the illustrated embodiment, the power demand controller 66 includes a positive current limit generation branch having a positive motor velocity limiter 68 and a positive current limit function block 70. Similarly, the power demand controller 66 includes a negative current limit generation branch having a negative motor velocity limiter 72 and a negative current limit function block 74 The power demand controller can receive a predetermined positive current limit setpoint (PSP) and a predetermined negative current limit setpoint (NSP). The value of the PSP and the NSP can be fixed, changeable or dynamic, and/or can be calculated or established by a user. The PSP and NSP values can be stored in a memory. If the PSP and NSP value are calculated, the values can be calculated by the controllers 26 or the BSCU 22 (FIG. 2) based on braking system 20 (FIG. 2) operation.

To generate the positive current limit, the positive motor velocity limiter 68 receives the motor velocity feedback signal and limits a value of the signal to a positive motor velocity limit $V_{pmax}$. The value of $V_{pmax}$ can be fixed, changeable or dynamic, and/or can be calculated or established by a user. The value of $V_{pmax}$ can be stored in a memory. The velocity of the motor $V_m$, the value of $V_{pmax}$ and the PSP can be input to the positive current limit function block 70, from which the positive current limit function block 70 can compute the positive current limit. For example, the positive current limit can be calculated in accordance with equation 1.

$$\text{Positive Current Limit} = \text{PSP} \times (1 - K_p(V_m/V_{pmax})) \qquad \text{Eq. 1}$$

In equation 1, $K_p$ is a predetermined gain constant between 0 and 1. The $K_p$ value can be tunable and is effective to set the peak motor current limit. The $K_p$ value can be stored in a memory. Once generated, the positive current limit is input to the motor current limiter 62.

To generate the negative current limit, the negative motor velocity limiter 72 receives the motor velocity feedback signal and limits a value of the signal to a negative motor velocity limit $V_{nmax}$. The value of $V_{nmax}$ can be fixed, changeable or dynamic, and/or can be calculated or established by a user. The value of $V_{nmax}$ can be stored in a memory. The velocity of the motor $V_m$, the value of $V_{nmax}$ and the NSP can be input to the negative current limit function block 74, from which the negative current limit function block 74 can compute the negative current limit. For example, the negative current limit can be calculated in accordance with equation 2.

$$\text{Negative Current Limit} = NSP \times (1 - K_n(V_m/V_{nmax})) \qquad \text{Eq. 2}$$

In equation 2, $K_n$ is a predetermined gain constant between 0 and 1. The $K_n$ value can be tunable and is effective to set the peak motor current limit. The $K_n$ value can be stored in a memory. Once generated, the negative current limit is input to the motor current limiter 62.

Since the positive and negative current limits are based in part on a ratio of actual motor velocity to a motor velocity limit, ($V_{pmax}$ and $V_{nmax}$, respectively), the higher the motor velocity, the smaller (in absolute value) the positive and negative current limits will be. As a result, as the velocity of the motor 32a increases, the allowable amount of peak current draw will decrease. Limiting the current delivered to the motor in this manner advantageously reduces the peak power demand of the controller 26 and actuator 28. Therefore, the power supply 26 can be correspondingly smaller and lighter than a power supply sized to meet the peak power demands without current limits. Associated benefits may include a reduction in the size of cabling between the power supply 26 and current driver 50 and fuel economy gains by the aircraft 10 (FIG. 1) as a whole.

The reduction in peak power demand by current limiting in the forgoing operation of the controller 26 typically occurs when a current transient occurs and the actuator is moving at a relatively rapid pace. Basing current limiting on motor velocity has no or little impact on average power consumption or steady state conditions. For example, when the motor velocity is zero or about zero but is drawing a high current level to generate a relatively high amount of torque that, in turn, results in a relatively high amount of force applied by the actuator ram to the brake stack, the positive motor limit can have a value that does not reduce braking power on the wheel 16. Rather, the likelihood of a current transient that will be limited is when the actuator ram 34 is moved in or out relative to the brake stack 30, which will often be when the actuator ram 34 is not in engagement with the brake stack 30.

It will be appreciated that the positive and negative current limits for each actuator 28 may be independently controlled, even if multiple actuators 28 are controlled by the same controller 26. It will further be appreciated that the positive and negative current limits may be independently controlled and/or established. The illustrated embodiment shows the limiting of the motor current command by both the positive current limit and the negative current limit. However, it is contemplated that the motor current command can be limited by just one of the positive current limit or the negative current limit.

Limiting of the current delivered to the motor may be selectively imposed and/or the degree to which current is limited may be changed based on various conditions. In one embodiment, the BSCU 22 may command the EMAC 26 to impose current limiting, impose current limiting in one of several current limit modes or impose no current limits. For instance, a current limiting mode may be established for each of a plurality circumstances. The modes may be based on aircraft conditions, such as available power, braking operation and/or any other appropriate factor. For each mode, corresponding values for PSP, $K_p$, $V_{pmax}$, NSP, $K_n$ and/or $V_{nmax}$ may be established to achieve various positive current limits and/or negative current limits as a function of motor velocity. Thus, the values other than motor velocity that contribute to the positive and negative current limits may be changed in response to commands, input signals or values, or sensed conditions to adjust power draw for various conditions. Predetermined values for various current limit modes may be used or values may be calculated based on criteria associated with aircraft or braking operation. To impose no positive current limit, the PSP value may be set to 1 and $K_p$ may be set to zero. Similarly, to impose no negative current limit, the NSP value may be set to -1 and $K_n$ may be set to zero.

An example set of circumstances where multiple current limit modes may be of use is for normal power supply 52 operation and emergency power supply 52 operation. In normal operation, power for braking functions may be derived from electricity generated by an aircraft engine generator and, in emergency operation, generator power may not be available and power may be derived from a battery back-up source and/or a capacitive charge storage source. In normal power source operation, the values governing the positive current limit and the negative current limit may be set to impose no current limits or current limits as a function of motor velocity that are adapted to reduce peak power demand as described above. In emergency power source operation, the values governing the positive current limit and/or the negative current limit may be set to impose greater current limits than may be found with normal power supply operation so as to enhance power economy. For instance, in emergency power source operation, the BSCU may command the EMAC to go into a low power consumption mode. In turn, the EMAC may adjust the values of $K_p$ and $K_n$ to reduce the consumption of power during braking operations. In some situations, adjustments to $K_p$ and $K_n$ may result in a reduction in braking performance, but such a trade-off may be acceptable if the alternative is prematurely depleting a back-up power source. In addition, various braking operations may be associated with various settable parameter values within each power source operation mode for an increased degree of power management control.

It will be appreciated that the present invention is not limited to an electromechanical actuation assembly for braking, but any electromechanical system where there is a desired to impose peak power limits as a function of motor velocity. For instance, an electromechanical actuation assembly for controlling the position of one of the landing gear struts 14 or one of the flight control surfaces 18 can include the current limiting techniques described herein. In addition, the invention has application to vehicles other than an aircraft (e.g., train brakes). In addition, the invention has application to environments other than vehicles, such as a hydraulic system.

Although the invention has been shown and described with respect to a certain preferred embodiment or embodiments, it is understood that equivalent alterations and modifications will occur to others skilled in the art upon the reading and understanding of this specification and the annexed drawings. In particular regard to the various functions performed by the above described elements (components, assemblies, devices, compositions, etc.), the terms (including a reference to a "means") used to describe such elements are intended to correspond, unless otherwise indicated, to any element which performs the specified function of the described element (i.e., that is functionally equivalent), even though not structurally equivalent to the disclosed structure which performs the function in the herein illustrated exemplary embodiment or embodiments of the invention. In addition, while a particular feature of the invention may have been described above with respect to only one or more of several illustrated embodiments, such feature may be combined with one or more other features of the other embodiments, as may be desired and advantageous for any given or particular application.

**Claims**

1.   An aircraft (10), comprising:

- at least one electromechanical actuator (28) including a motor (32a) for applying a force to a moveable item (14,18,34) in response to a motor drive signal;
- a power supply (52); and
- an electromechanical actuator controller (26) for generating the motor drive signal based on a motor current command and with electrical power from the power supply, the electromechanical actuator controller including:

- a motor current limiter (62) for limiting the motor current command to at least one of a positive current limit or a negative current limit, the positive and negative current limits being a function of motor velocity by which the positive current limit and negative current limit are inversely related to the motor velocity; and
- a current driver (50) for outputting the motor drive signal to the motor in accordance with the limited motor current command.

2.   The aircraft of claim 1, wherein the moveable item is an actuator (34) for applying a braking force to perform a braking operation of a wheel (16) of the aircraft.

3.   The aircraft of claim 1 or 2, wherein the positive current limit is established by the equation:

$$\text{Positive Current Limit} = PSP \times (1 - K_p(V_m/V_{pmax}))$$

wherein PSP is a predetermined positive current limit set point, $K_p$ is a predetermined gain constant, $V_m$ is the velocity of the motor and $V_{pmax}$ is a predetermined positive motor velocity limit.

4.   The aircraft of any of claims 1 to 3, wherein the negative current limit is established by the equation:

$$\text{Negative Current Limit} = NSP \times (1 + K_n(V_m/V_{nmax}))$$

wherein NSP is a predetermined negative current limit set point, $K_n$ is a predetermined gain constant, $V_m$ is the velocity of the motor and $V_{nmax}$ is a predetermined negative motor velocity limit.

5.   The aircraft of any of claims 1 to 4, wherein the positive current limit is established by a power demand controller (66) that includes a motor velocity limiter (68) for limiting a motor velocity value to a positive motor velocity limit and a function block (70) that derives the positive current limit as a function of the limited motor velocity value and a positive motor current limit setpoint.

6. The aircraft of any of claims 1 to 5, wherein the negative current limit is established by a power demand controller (66) that includes a motor velocity limiter (72) for limiting a motor velocity value to a negative motor velocity limit and a function block (74) that derives the negative current limit as a function of the limited motor velocity value and a negative motor current limit setpoint.

7. The aircraft of any of claims 1 to 6, wherein values used to determine the positive current limit and the negative current limit as functions of motor velocity are set based on an aircraft condition and include a first set of values for determining the positive and negative current limits associated with normal power supply operation and a second set of values for determining the positive and negative current limits associated with emergency power supply operation.

8. A controller (26) for an electromechanical actuator (28) having a motor (32a) that is driven in response to a motor drive signal generated by the controller, comprising:

   - a motor current limiter (62) for limiting a motor current command to at least one of a positive current limit or a negative current limit, the positive and negative current limits being a function of motor velocity by which the positive current limit and negative current limit are inversely related to the motor velocity; and
   - a current driver (50) for outputting the motor drive signal to the motor in accordance with the limited motor current command.

9. The controller of claim 8, wherein the positive current limit is established by a power demand controller (66) that includes a motor velocity limiter (68) for limiting a motor velocity value to a positive motor velocity limit and a function block (70) that derives the positive current limit as a function of the limited motor velocity value and a positive motor current limit setpoint.

10. The controller of claim 8 or 9, wherein the negative current limit is established by a power demand controller (66) that includes a motor velocity limiter (72) for limiting a motor velocity value to a negative motor velocity limit and a function block (74) that derives the negative current limit as a function of the limited motor velocity value and a negative motor currents limit setpoint.

11. The controller of any of claims 8 to 10, wherein values used to determine the positive current limit and the negative current limit as functions of motor velocity are set based on an aircraft condition and include a first set of values for determining the positive and negative current limits associated with normal power supply operation and a second set of values for determining the positive and negative current limits associated with emergency power supply operation.

12. A method of limiting peak power demand of a controller (26) for an electromechanical brake actuator (28) having a motor (32a), the electromechanical brake actuator operative to apply a braking force to brake a wheel (16) of a vehicle (10), comprising:

   - limiting a motor current command to at least one of a positive current limit or a negative current limit, the positive and negative current limits being a function of motor velocity by which the positive current limit and negative current limit are inversely related to the motor velocity; and
   - outputting the motor drive signal to the motor in accordance with the limited motor current command.

13. The method of claim 12, wherein the positive current limit is established by limiting a motor velocity value to a positive motor velocity limit and deriving the positive current limit as a function of the limited motor velocity value and a positive motor current limits setpoint.

14. The method of claim 12 or 13, wherein the negative current limit is established by limiting a motor velocity value to a negative motor velocity limit and deriving the negative current limit as a function of the limited motor velocity value and a negative motor current limit setpoint.

15. The method of any of claims 12 to 14, further comprising adjusting values used to determine the positive current limit and the negative current limit as functions of motor velocity based on vehicle condition and include a first set of values for determining the positive and negative current limits associated with normal power supply operation and a second set of values for determining the positive and negative current limits associated with emergency power supply operation.

**Patentansprüche**

1.  Luftfahrzeug (10) mit:

    - mindestens einer elektromechanischen Betätigungseinrichtung (28) mit einem Motor (32a) zum Aufbringen einer Kraft auf einen bewegbaren Gegenstand (14, 18, 34) in Reaktion auf ein Motorantriebssignal;
    - einer Energiequelle (52); und
    - einer Steuerung (26) für die elektromechanische Betätigungseinrichtung zum Erzeugen des Motorantriebssignals basierend auf einem Motorstrombefehl und mit elektrischer Energie aus der Energiequelle, wobei die Steuerung für die elektromechanische Betätigungseinrichtung aufweist:

      - einen Motorstrombegrenzer (62) zum Begrenzen des Motorstrombefehls auf einen positiven Stromgrenzwert und/oder einen negativen Stromgrenzwert, wobei der positive und der negative Stromgrenzwert eine Funktion der Motorgeschwindigkeit sind, durch welche der positive Stromgrenzwert und der negative Stromgrenzwert in umgekehrter Beziehung zu der Motorgeschwindigkeit stehen; und
      - einen Stromtreiber (50) zum Ausgeben des Motorsteuersignals an den Motor entsprechend dem begrenzten Motorstrombefehl.

2.  Luftfahrzeug nach Anspruch 1, bei dem der bewegbare Gegenstand eine Stelleinrichtung (34) ist, welche eine Bremskraft zur Durchführung eines Bremsvorgangs eines Rades (16) des Luftfahrzeugs aufbringt.

3.  Luftfahrzeug nach Anspruch 1 oder 2, bei dem der positive Stromgrenzwert durch die Gleichung

$$\text{positiver Stromgrenzwert} = PSP \times (1 - K_p (V_m/V_{pmax})),$$

ermittelt wird, wobei PSP ein vorbestimmter positiver Stromgrenzwerteinstellpunkt ist, $K_p$ eine vorbestimmte Verstärkungskonstante ist, $V_m$ die Geschwindigkeit des Motors und $V_{pmax}$ eine vorbestimmte positive Motorgrenzgeschwindigkeit ist.

4.  Luftfahrzeug nach einem der Ansprüche 1 bis 3, bei dem der negative Stromgrenzwert durch die Gleichung

$$\text{negativer Stromgrenzwert} = NSP \times (1 + K_n (V_m/V_{nmax})),$$

ermittelt wird, wobei NSP ein vorbestimmter negativer Stromgrenzwerteinstellpunkt ist, $K_n$ eine vorbestimmte Verstärkungskonstante ist, $V_m$ die Geschwindigkeit des Motors und $V_{nmax}$ eine vorbestimmte negative Motorgrenzgeschwindigkeit ist.

5.  Luftfahrzeug nach einem der Ansprüche 1 bis 4, bei dem der positive Stromgrenzwert durch eine Energiebedarfssteuerung (66) ermittelt wird, die einen Motorgeschwindigkeitsbegrenzer (68) zum Begrenzen des Motorgeschwindigkeitswerts auf eine positive Motorgrenzgeschwindigkeit und einen Funktionsblock (70) aufweist, der den positiven Stromgrenzwert als Funktion des begrenzten Motorgeschwindigkeitswertes und eines positiven Motorstromgrenzwerteinstellpunkts ableitet.

6.  Luftfahrzeug nach einem der Ansprüche 1 bis 5, bei dem der negative Stromgrenzwert durch eine Energiebedarfssteuerung (66) ermittelt wird, die einen Motorgeschwindigkeitsbegrenzer (72) zum Begrenzen des Motorgeschwindigkeitswerts auf eine negative Motorgrenzgeschwindigkeit und einen Funktionsblock (74) aufweist, der den negativen Stromgrenzwert als Funktion des begrenzten Motorgeschwindigkeitswertes und eines negativen Motorstromgrenzwerteinstellpunkts ableitet.

**7.** Luftfahrzeug nach einem der Ansprüche 1 bis 6, bei dem zur Bestimmung des positiven Stromgrenzwerts und des negativen Stromgrenzwerts als Funktionen der Motorgeschwindigkeit verwendete Werte auf der Basis eines Luftfahrzeugzustands eingestellt werden und einen ersten Satz von Werten zum Bestimmen des positiven und des negativen Stromgrenzwerts, die einem normalen Energiequellenbetrieb zugeordnet sind, und einen zweiten Satz von Werten zum Bestimmen des positiven und des negativen Stromgrenzwerts umfassen, die einem Notenergieversorgungsbetrieb zugeordnet sind.

**8.** Steuerung (26) für eine elektromechanische Stelleinrichtung (28) mit einem Motor (32a), der in Reaktion auf ein von der Steuerung erzeugtes Motorantriebssignal angetrieben wird, mit:

- einem Motorstrombegrenzer (62) zum Begrenzen eines Motorstrombefehls auf einen positiven Stromgrenzwert und/oder einen negativen Stromgrenzwert, wobei der positive und der negative Stromgrenzwert eine Funktion der Motorgeschwindigkeit sind, durch welche der positive Stromgrenzwert und der negative Stromgrenzwert in umgekehrter Beziehung zu der Motorgeschwindigkeit stehen; und
- einem Stromtreiber (50) zum Ausgeben des Motorantriebssignals an den Motor entsprechend dem begrenzten Motorstrombefehl.

**9.** Steuerung nach Anspruch 8, bei dem der positive Stromgrenzwert durch eine Energiebedarfssteuerung (66) ermittelt wird, die einen Motorgeschwindigkeitsbegrenzer (68) zum Begrenzen des Motorgeschwindigkeitswerts auf eine positive Motorgrenzgeschwindigkeit und einen Funktionsblock (70) aufweist, der den positiven Stromgrenzwert als Funktion des begrenzten Motorgeschwindigkeitswertes und eines positiven Motorstromgrenzwerteinstellpunkts ableitet.

**10.** Steuerung nach einem der Ansprüche 8 oder 9, bei dem der negative Stromgrenzwert durch eine Energiebedarfssteuerung (66) ermittelt wird, die einen Motorgeschwindigkeitsbegrenzer (72) zum Begrenzen des Motorgeschwindigkeitswerts auf eine negative Motorgrenzgeschwindigkeit und einen Funktionsblock (74) aufweist, der den negativen Stromgrenzwert als Funktion des begrenzten Motorgeschwindigkeitswertes und eines negativen Motorstromgrenzwerteinstellpunkts ableitet.

**11.** Steuerung nach einem der Ansprüche 8 bis 10, bei dem die zur Bestimmung des positiven Stromgrenzwerts und des negativen Stromgrenzwerts als Funktionen der Motorgeschwindigkeit verwendeten Werte auf der Basis eines Luftfahrzeugzustands eingestellt werden und einen ersten Satz von Werten zum Bestimmen des positiven und des negativen Stromgrenzwerts, die einem normalen Energiequellenbetrieb zugeordnet sind, und einen zweiten Satz von Werten zum Bestimmen des positiven und des negativen Stromgrenzwerts umfassen, die einem Notenergieversorgungsbetrieb zugeordnet sind.

**12.** Verfahren zum Begrenzen des Spitzenenergiebedarfs einer Steuerung (26) für eine elektromechanische Bremsenbetätigungseinrichtung (28) mit einem Motor (32a), wobei die elektromechanische Bremsenbetätigungseinrichtung zum Aufbringen einer Bremskraft zum Bremsen eines Rades (16) eines Fahrzeugs (10) betreibbar ist, mit den folgenden Schritten:

- Begrenzen eines Motorstrombefehls auf einen positiven Stromgrenzwert und/oder einen negativen Stromgrenzwert, wobei der positive und der negative Stromgrenzwert eine Funktion der Motorgeschwindigkeit sind, durch welche der positive Stromgrenzwert und der negative Stromgrenzwert in umgekehrter Beziehung zu der Motorgeschwindigkeit stehen; und
- Ausgeben des Motorantriebssignals an den Motor entsprechend dem begrenzten Motorstrombefehl.

**13.** Verfahren nach Anspruch 12, bei dem der positive Stromgrenzwert ermittelt wird, indem ein Motorgeschwindigkeitswert auf eine positive Motorgrenzgeschwindigkeit begrenzt wird und der positive Stromgrenzwert als Funktion des begrenzten Motorgeschwindigkeitswerts und eines positiven Motorstrombegrenzungseinstellpunkts abgeleitet wird.

**14.** Verfahren nach Anspruch 12 oder 13, bei dem der negative Stromgrenzwert ermittelt wird, indem ein Motorgeschwindigkeitswert auf eine negative Motorgrenzgeschwindigkeit begrenzt wird und der negative Stromgrenzwert als Funktion des begrenzten Motorgeschwindigkeitswerts und eines negativen Motorstrombegrenzungseinstellpunkts abgeleitet wird.

**15.** Verfahren nach einem der Ansprüche 12 bis 14, ferner mit dem Anpassen von zur Bestimmung des positiven Stromgrenzwerts und des negativen Stromgrenzwerts als Funktionen der Motorgeschwindigkeit verwendeten Werten auf der Basis eines Fahrzeugzustands, wobei die Werte einen ersten Satz von Werten zum Bestimmen des positiven und des negativen Stromgrenzwerts, die einem normalen Energiequellenbetrieb zugeordnet sind, und einen zweiten Satz von Werten zum Bestimmen des positiven und des negativen Stromgrenzwerts umfassen, die einem Notenergieversorgungsbetrieb zugeordnet sind.

## Revendications

**1.** Aéronef (10) comprenant:

- au moins un actionneur électromécanique (28) avec un moteur (32a) pour appliquer une force sur un objet mobil (14, 18, 34) en réaction à un signal d'entraînement du moteur;
- une source d'énergie (52); et
- un régulateur (26) de l'actionneur électromécanique pour générer ledit signal d'entraînement du moteur à base d'une commande de courant moteur et avec énergie électrique de la source d'énergie, ledit régulateur de l'actionneur électromécanique comprenant:

- un limiteur de courant moteur (62) pour limiter la commande de courant moteur à une valeur de courant de limite positif et/ou une valeur de courant de limite négatif, les valeurs de courant de limite positifs ou négatifs étant fonction de la vitesse du moteur par laquelle la valeur de courant de limite positif et la valeur de courant de limite négatif sont inversement reliés à la vitesse du moteur; et
- un circuit de commande de courant (50) pour sortir en output le signal de courant moteur conformément à la commande de courant moteur limité.

**2.** Avion selon la revendication 1, dans lequel l'objet mobil est un actionneur (34) appliquant une force de freinage pour réaliser une opération de freinage d'une roue (16) de l'avion.

**3.** Avion selon la revendication 1 ou 2, dans lequel la valeur de limite positif est établie selon l'équation

$$\text{valeur de courant de limite positif} = PSP \times (1 - K_p(V_m/V_{pmax}))$$

ou PSP est un point de réglage prédéterminé de la valeur de courant de limite positif, $K_p$ est une constante de gain prédéterminée, $V_m$ est la vitesse du moteur et $Vp_{max}$ est la limite positif de la vitesse du moteur prédéterminée.

**4.** Avion selon l'une quelconque des revendications 1 à 3, dans lequel la valeur de limite négatif est établie selon l'équation

$$\text{valeur de courant de limite négatif} = NSP \times (1 + K_n(V_m/V_{nmax}))$$

ou NSP est un point de réglage prédéterminé de la valeur de courant de limite négatif, $K_n$ est une constante de gain prédéterminée, $V_m$ est la vitesse du moteur et $V_{nmax}$ est la limite négative de la vitesse du moteur prédéterminée.

**5.** Avion selon l'une quelconque des revendications 1 à 4, dans lequel la valeur de courant de limite positif est établie par un régulateur du besoin d'énergie (66) comprenant un limiteur de la vitesse du moteur (68) pour limiter la valeur de vitesse du moteur à une limite de vitesse du moteur positif et un bloc de fonction (70) dérivant la valeur de courant de limite positif comme une fonction de la valeur de la vitesse du moteur limitée et d'un point de réglage prédéterminé du courant moteur de limite positif.

**6.** Avion selon l'une quelconque des revendications 1 à 5, dans lequel la valeur du courant de limite négatif est établie par un régulateur du besoin d'énergie (66) comprenant un limiteur de la vitesse du moteur (72) pour limiter la valeur de vitesse du moteur à une limite de vitesse du moteur négative et un bloc de fonction (74) dérivant la valeur de courant de limite négatif comme une fonction de la valeur de la vitesse du moteur limitée et d'un point de réglage prédéterminé du courant moteur de limite négatif.

**7.** Avion selon l'une quelconque des revendications 1 à 6, dans lequel des valeurs utilisées pour la détermination du courant de limite positif et de la valeur de courant de limite négatif en fonction de la vitesse du moteur sont réglées á base d'un état de l'avion et comprennent un premier groupe de valeurs pour déterminer les valeurs de courants de limite positifs et négatifs associés au fonctionnement normal de la source d'énergie et un deuxième groupe de valeurs pour déterminer les valeurs de courants de limite positifs et négatifs associés à un fonctionnement en mode d'urgence de la source d'énergie.

**8.** Régulateur (26) pour un actionneur électromécanique (28) avec un moteur (32a) entraîné en réaction à un signal d'entraînement du moteur généré par le régulateur, comprenant:

- un limiteur de courant moteur (62) pour limiter une commande de courant moteur à un valeur de courant de limite positif et/ou un courant de limite négatif, les valeurs de courants de limite positifs ou négatifs étant fonction de la vitesse du moteur par laquelle la valeur de courant de limite positif et la valeur de courant de limite négatif sont inversement reliés à la vitesse du moteur; et
- un circuit de commande de courant (50) pour sortir en output le signal de courant moteur conformément à la commande de courant moteur limité.

**9.** Régulateur selon la revendication 8, dans lequel la valeur de courant de limite positif est établie par un régulateur du besoin d'énergie (66) comprenant un limiteur de la vitesse du moteur (68) pour limiter la valeur de vitesse du moteur à une limite de vitesse du moteur positif et un bloc de fonction (70) dérivant la valeur de courant de limite positif comme une fonction de la valeur de la vitesse du moteur limitée et d'un point de réglage prédéterminé du courant moteur de limite positif.

**10.** Régulateur selon la revendication 8 ou 9, dans lequel la valeur de courant de limite négatif est établi par un régulateur du besoin d'énergie (66) comprenant un limiteur de la vitesse du moteur (72) pour limiter la valeur de vitesse du moteur à une limite de vitesse du moteur négative et un bloc de fonction (74) dérivant la valeur de courant de limite négatif comme une fonction de la valeur de la vitesse du moteur limitée et d'un point de réglage prédéterminé du courant moteur de limite négatif.

**11.** Régulateur selon l'une quelconque des revendications 8 à 10, dans lequel des valeurs utilisées pour la détermination de la valeur de courant de limite positif et de la valeur de courant de limite négatif en fonction de la vitesse du moteur sont réglées á base d'un état de l'avion et comprennent un premier groupe de valeurs pour déterminer les valeurs des courants de limite positifs et négatifs associés au fonctionnement normal de la source d'énergie et un deuxième groupe de valeurs pour déterminer les valeurs des courants de limite positifs et négatifs associés à un fonctionnement en mode d'urgence de la source d'énergie.

**12.** Procédé de limitation du besoin d'énergie de pointe d'un régulateur (26) d'un actionneur de frein électromécanique (28) avec un moteur (32a), l'actionneur de frein électromécanique étant apte à appliquer une force de freinage pour freiner une roue (16) d'un véhicule (10), comprenant les étapes suivantes:

- limiter un courant moteur à une valeur de courant de limite positif et/ou un courant de limite négatif, les courants de limite positifs ou négatifs étant fonction de la vitesse du moteur par laquelle la valeur de courant de limite positif et la valeur de courant de limite négatif sont inversement reliés à la vitesse du moteur; et
- sortir en output le signal de courant moteur conformément à la commande de courant moteur limité.

**13.** Procédé selon la revendication 12, dans lequel la valeur de courant de limite positif est établie par la limitation de la valeur de vitesse du moteur à une limite de vitesse du moteur positif et la dérivation de la valeur de courant de limite positif comme une fonction de la valeur de la vitesse du moteur limitée et d'un point de réglage prédéterminé du courant moteur de limite positif.

**14.** Procédé selon la revendication 12 ou 13, dans lequel la valeur de courant de limite négatif est établi par la limitation de la valeur de vitesse du moteur à une limite de vitesse du moteur négative et la dérivation de la valeur de courant de limite négatif comme une fonction de la valeur de la vitesse du moteur limitée et d'un point de réglage prédéterminé du courant moteur de limite négatif.

**15.** Procédé selon l'une quelconque des revendications 12 à 14, comprenant en outre l'ajustage des valeurs utilisées pour la détermination de la valeur de courant de limite positif et de la valeur de courant de limite négatif en fonction de la vitesse du moteur á base d'un état du véhicule et lesdites valeurs comprenant un premier groupe de valeurs pour déterminer les valeurs des courants de limite positifs et négatifs associés au fonctionnement normal de la source d'énergie et un deuxième groupe de valeurs pour déterminer les valeurs des courants de limite positifs et négatifs associés à un fonctionnement en mode d'urgence de la source d'énergie.

FIG. 1

FIG. 2

**FIG. 3**

FIG. 4

**FIG. 5**

## REFERENCES CITED IN THE DESCRIPTION

**Patent documents cited in the description**

- US 568863 A
- US 4776433 A
- US 6003640 A

- US 6296325 B
- US 6402259 B
- US 6662907 B